# EUROPÄISCHE PATENTANMELDUNG

(11) **EP 2 270 437 A1**
(43) Veröffentlichungstag der Anmeldung: **05.01.2011**
(21) Anmeldenummer: 10167207.9
(22) Anmeldetag: 24.06.2010
(51) Int. Cl.: G01D 11/24

(54) **Sensorgehäusesystem**

(30) Priorität: 30.06.2009 DE 202009009048 U
(71) Anmelder: SICK AG, 79183 Waldkirch (DE)
(72) Erfinder: Yltchev, Georgy, 79194, Gundelfingen (DE)
(74) Vertreter: Ludewigt, Christoph

(57) **Zusammenfassung**

Die Erfindung betrifft ein Sensorgehäusesystem für optoelektronische Sensoren (2), bestehend aus wenigstens einem flüssigkeitsdichten Sensorgehäuse (4) mit einem Gewindeflansch (6) für einen elektrischen Anschluss und einem Adapter (8) mit einem ersten Gewinde (12) für den Gewindeflansch (6), wobei der Adapter (8) Befestigungsmittel (10) für das Sensorgehäusesystem (1) aufweist.

## Beschreibung

Die Erfindung betrifft ein Sensorgehäusesystem für optoelektronische Sensoren, bestehend aus wenigstens einem flüssigkeitsdichten Gehäuse mit einem Gewindeflansch für einen elektrischen Anschluss.

Aus der DE 103 55 350 A1 ist ein Elektronikmodul für den Einsatz in der Lebensmittelindustrie bekannt, wobei mindestens ein Befestigungsfuß zur Montage des Elektronikmoduls an einer Auflagefläche vorgesehen ist und die Gehäuseunterseite in Bezug zur Auflagefläche im Randbereich einen größeren Abstand als im Bereich des Befestigungsfußes aufweist. In einem Ausführungsbeispiel weist der Befestigungsfuß bei dem Elektronikmodul neben einer Schlüsselfläche und einer Schraube noch einen Adapter auf. Durch die Verwendung des Adapters können unterschiedliche Standardschrauben zum Einschrauben des Elektronikmoduls in eine entsprechende Bohrung in der Auflagefläche verwendet werden. Eine elektrische Kontaktierung des Elektronikmoduls erfolgt über eine Vielzahl von Buchsen auf einer Oberseite des Elektronikmoduls.

Aus der DE 20 2006 013 147 U1 ist ein elektrischer Stecker zum Anschluss eines elektrischen Geräts, insbesondere eines optoelektronischen Sensors bekannt, wobei der Stecker ein Steckergehäuse, einen im Steckergehäuse angeordneten Steckverbinder zur elektrischen Kontaktierung des Geräts über eine entsprechend ausgebildete, an dem Gerät angeordnete Buchse und ein in das Steckergehäuse geführtes elektrisches Anschlusskabel aufweist, wobei das Steckergehäuse eine Außenkontur aufweist, die zumindest in einem Abschnitt sphärisch ausgebildet ist.

Dieser elektrische Stecker und der optoelektronische Sensor sind jedoch nicht für den Einsatz in der Lebensmittelindustrie geeignet.

Weiter sind von der Anmelderin Lichtschranken für den Einsatz in der verarbeitenden und verpackenden Lebensmittel- und Getränkeindustrie sowie der Pharmabranche bekannt. Diese Lichtschranken weisen ein Edelstahlgehäuse auf und sind resistent gegen aggressive Reinigungs- und Desinfektionsmittel.

Für den Bereich Lebensmittelverarbeitung sind bestimmte Werkstoffe, wie z. B. Glas verboten. Deshalb werden häufig auch Kunststoffe verwendet. Diese Kunststoffe haben jedoch eine geringe Beständigkeit gegen Temperatureinflüsse, Wasser und Chemikalien.

Sensoren unterliegen in industriellen Anwendungen zunehmend neuen Anforderungen in Bezug auf Resistenz gegenüber äußeren Einwirkungen, insbesondere Einwirkungen mechanischer, chemischer oder witterungsbedingter Natur.

Die mechanischen Einwirkungen definieren sich aus möglichen Beschädigungen durch Fremdgegenstände, welche im Stande sind, Oberflächen zu verkratzen, abzutragen oder zu durchdringen, was zur Beschädigung des Sensors führen kann. Bei Verwendung von Sensoren in vielen Industriebereichen, beispielsweise der Lebensmittelindustrie, der Solarenergieindustrie oder der Pharmaindustrie müssen die Sensoren die Anforderungen der Dichtigkeitsklasse 1P69K erfüllen, welche insbesondere fordert, dass die Geräte eine Reinigung durch einen Hochdruckwasserstrahl, welcher einen Druck im Bereich von 80 bar bis 100 bar und eine Wassertemperatur von 80°C aufweist, bei einem Strahlabstand von 100 bis 150mm unbeschädigt überstehen müssen. Dies führt dazu, dass hohe Anforderungen an die Stabilität und Robustheit des Sensors gestellt werden.

Chemische Einwirkungen durch aggressive Medien, welche in industriellem Feld, beispielsweise der Nahrungsmittelindustrie, zur Reinigung von Fertigungslinien und deren Umfeld verwendet werden, stellen ebenfalls hohe Anforderungen an zu verwendende Materialien, da aggressive Reinigungsmedien in der Lage sind, Oberflächen von Sensoren anzulösen, Korrosion zu verursachen und somit eine Beschädigung der Sensoren herbeizuführen und die Langzeitbeständigkeit der Sensoren zu gefährden.

Weiter muss in der Lebensmittelindustrie eine Ablagerung von Keimen am Gehäuse oder in einem Übergangsbereich vom Gehäuse zur Auflagefläche weitestgehend vermieden werden.

Zu witterungsbedingten Schädigungen eines Sensors zählen beispielsweise die fehlende oder unzureichende Resistenz der verwendeten Materialien hinsichtlich ultravioletter Strahlungen und Ozon. Eine weitere Problematik ergibt sich durch die erforderliche Dichtigkeit, Temperaturbeständigkeit und Temperaturwechselbeständigkeit von Bedienelementen.

Sensorgehäuse aus Edelstahl für den Einsatz in der Lebensmittelindustrie sind aufwändig in der Herstellung. Entsprechende Gehäuse werden beispielsweise einstückig durch Metallspritzguss (metal injection molding) hergestellt, wobei die Gehäuse in einem speziellen Verfahrensschritt schrumpfen. Aufwändig dabei ist es, vorgegebene Maßtoleranzen des Gehäuses zu gewährleisten. Derartige Sensorgehäuse können auch durch andere Verfahren, beispielsweise Fräsen, Feingießen oder dergleichen hergestellt werden. Auch diese Herstellungsverfahren sind aufwändig.

Der Erfindung liegt die Aufgabe zugrunde, ein kostengünstiges Sensorgehäusesystem bereitzustellen, mit dem eine Vielzahl von unterschiedlichen Befestigungs-und Anschlussmöglichkeiten bereitgestellt werden können, die in der Lebensmittelindustrie eingesetzt werden können.

Die Aufgabe wird erfindungsgemäß nach Anspruch 1 mit einem Sensorgehäusesystem für optoelektronische Sensoren gelöst, bestehend aus wenigstens einem flüssigkeitsdichten Gehäuse mit einem Gewindeflansch für einen elektrischen Anschluss und einem Adapter mit einem ersten Gewinde für den Gewindeflansch, wobei der Adapter Befestigungsmittel für das Sensorgehäusesystem aufweist.

Das Sensorgehäuse besteht aus korrosionsfreiem Stahl, beispielsweise Edelstahl oder aus einem sehr widerstandsfähigen Kunststoff bzw. Kunststoff mit sehr widerstandsfähiger Beschichtung, welcher hohen Anforderungen in der Lebensmittelindustrie genügt.

Für den Lichtein- und/oder Lichtaustritt ist in dem optoelektronischen Sensor eine Frontscheibe vorgesehen. Die Frontscheibe ist vorzugsweise aus Kunststoff gebildet und mit dem Edelstahlgehäuse fest verbunden, beispielsweise eingeklebt. Durch die feste Verbindung der Frontscheibe mit dem Edelstahlgehäuse ist die Verbindung dicht ausgeführt. Eine Frontscheibe aus Kunststoff hat gegenüber einer Glasscheibe den Vorteil, dass diese weniger zur Splitterbildung neigt bei einer Beschädigung als eine Glasscheibe. Für den Einsatz in der Lebensmittelindustrie ist Glas unbedingt zu vermeiden.

Der Adapter ist dabei fugenlos an das erfindungsgemäße Sensorgehäuse anbringbar, wodurch eine Abdichtung mit dem Sensorgehäuse erfolgt und eine einfache Reinigung ermöglicht wird. Durch das Fehlen von Fugen können sich keine Rückstände von Reinigungsmitteln, Lebensmittelresten oder Keimen bilden.

Bei der erfindungsgemäßen Ausgestaltung des Sensorgehäusesystems erfolgt die Verbindung zwischen dem Adapter und dem Sensorgehäuse dadurch, dass der Adapter ein Gewinde, beispielsweise ein Innengewinde, und das Sensorgehäuse ein korrespondierendes Gewinde, beispielsweise ein Außengewinde aufweist, so dass das Sensorgehäuse und der Adapter direkt miteinander verschraubbar sind. Durch die direkte Verschraubung von Sensorgehäuse und Adapter ergibt sich eine verbesserte Dichtigkeit des gesamten Sensorgehäusesystems.

Der Gewindeflansch des Sensorgehäuses dient dabei als einheitliche mechanische Schnittstelle zur Aufnahme von verschiedenen Adaptern und zur Durchführung des elektrischen Anschlusses des Sensors, beispielsweise indem ein Anschlusskabel durch eine den Adapter durchsetzende Bohrung geführt ist, oder indem im Gewindeflansch entsprechende Kontaktpins für einen Steckerkontakt positioniert sind. Dadurch ist es möglich die aufwändig herzustellenden Sensorgehäuse, beispielsweise aus Edelstahl mit verschiedenen, günstig herzustellenden Gewindeflanschen und Adaptern zu kombinieren, ohne dazu eine Vielzahl unterschiedlicher Sensorgehäuse herstellen zu müssen. Das Sensorgehäuse ist dabei als einstückiges Metallspritzgehäuse (metal injection molding) ausgebildet. Der Gewindeflansch ist dabei an dem Sensorgehäuse beispielsweise angeschweißt, angeklebt, angelötet oder vergleichbar angebracht. Dabei können unterschiedlich ausgebildete Gewindeflansche vorgesehen werden. Es ist auch vorgesehen, den Gewindeflansch direkt einstückig mit dem Sensorgehäuse herzustellen. Der Adapter wird vorzugsweise preiswert als Drehteil oder einfaches Metallspritzgehäuseteil (metal injection molding) bzw. Druckgussteil hergestellt. Eine zusätzliche Befestigungsschnittstelle an dem Gerät selbst, wie z. B herkömmliche Befestigungsbohrungen, können dabei vollständig entfallen.

Das Sensorgehäusesystem dient zur hygienegerechten Befestigung von Sensoren. Hierzu weist der Adapter die Befestigungsmittel auf. Die Befestigungsmittel können unabhängig vom Sensorgehäuse an unterschiedliche Befestigungsmöglichkeiten angepasst werden. Das Sensorgehäusesystem ist Reinigungsmittelbeständig ausgeführt und weist eine Schutzklasse von IP68 und IP69K auf.

Das Sensorgehäusesystem kapselt elektronische oder optoelektronische Komponenten und die elektrische Zuleitung flüssigkeitsdicht ab, so dass diese von aggressiven Medien abgeschirmt sind, so dass das gesamte Sensorgehäusesystem in einer sterilen Umgebung eingesetzt werden kann, die als keim- und bakterienfrei, beispielsweise in der Lebensmittel- und Pharmaindustrie vorgefunden wird, denn diese Umgebung kann in regelmäßigen zeitlichen Abständen mit entsprechend aggressiven Reinigungsmitteln oder einem Heißwasserhochdruckstrahl gereinigt werden. Da die aggressiven Reinigungsmittel nicht in unmittelbaren Kontakt mit den elektronischen oder optoelektronischen Komponenten gelangen, werden diese nicht von den Reinigungsmitteln angegriffen.

Die Außenseiten des Sensors und des Adapters können demzufolge mittels entsprechenden Reinigungsvorgängen keim- und bakterienfrei gehalten werden, so dass das erfindungsgemäße Sensorgehäusesystem in der Lebensmittelverarbeitung oder der Pharma-Industrie ohne weiteres eingesetzt werden kann.

Um die Dichtigkeit und die Reinigungsmöglichkeiten des erfindungsgemäßen Sensorgehäusesystems weiter zu erhöhen, ist vorzugsweise vorgesehen, dass das Sensorgehäuse und der Adapter eine gerundete Oberfläche aufweisen. Durch die Minimierung einer Kantenzahl wird sowohl die Dichtigkeit erhöht, als auch die Verschmutzungsneigung des Sensorgehäusesystems reduziert bzw. die Reinigungsmöglichkeit wesentlich verbessert.

In Weiterbildung der Erfindung ist das Befestigungsmittel durch ein zweites Gewinde gebildet. Das zweite Gewinde ist auf einer Außenseite des Adapters als Außengewinde ausgebildet, wodurch der Adapter in einer Bohrung versenkt befestigt werden kann.

Zur Fugenvermeidung weist der Adapter einen Anschlagring zur Montage auf. Der Anschlagring ist dabei kegelstumpfringförmig ausgebildet, um einen gleichmäßigen Übergangsbereich zwischen Adapteroberfläche und einer Befestigungsoberfläche zu schaffen. Dadurch wird eine Rückstandsbildung durch Reinigungsmittel oder Lebensmittel sowie eine Keimbildung verhindert.

In einer alternativen Ausführungsform weist das Befestigungsmittel eine Außenkontur auf, die zumindest in einem Abschnitt sphärisch oder kugelförmig ausgebildet ist. Dieser sphärische Abschnitt ist in eine Kugelgelenkhalterung einspannbar. Der Adapter ermöglicht somit gleichzeitig sowohl einen Schutz der elektrischen Verbindung als auch eine mechanische Befestigung. Durch die sphärische oder kugelförmige Form kann der Sensor in einer entsprechenden Halterung beweglich befestigt werden, um beispielsweise eine präzise Justierung vorzunehmen. Dies ist besonders dann von erheblichem Vorteil, wenn der optoelektronische Sensor sehr präzise in unterschiedlichen Freiheitsgraden drehbar und/oder kippbar eingestellt werden soll.

In einer weiteren alternativen Ausführungsform weist das Befestigungsmittel einen zylindrischen Abschnitt auf. Durch die zylindrische Form kann der Sensor sehr einfach mit einer Befestigungsschelle montiert werden. Dabei lässt sich der Sensor zur Justage drehen und in einer Achse geringfügig verschieben.

In Weiterbildung der Erfindung ist zwischen dem Sensorgehäuse und dem Adapter ein Dichtungsring vorgesehen. Durch den Dichtungsring kann weiter eine Fugenbildung zwischen Sensorgehäuse und Adapter vermieden werden. Weiter wird durch den Dichtungsring eine Dichtigkeit zwischen Adapter und Sensorgehäuse auch bei höchsten Belastungen gewährleistet. Bei extremen chemischen Beanspruchungen kann der Dichtungsring auch ausgetauscht werden, um einer Materialermüdung vorzubeugen.

In Weiterbildung der Erfindung kann das Befestigungsmittel durch einen Bajonettverschluss gebildet sein. Dieser bietet den Vorteil, dass der Verschluss gegen Lösen gesichert ist und weniger als eine Umdrehung zur Montage benötigt wird.

Im Folgenden wird die Erfindung an Hand von Ausführungsbeispielen unter Bezugnahme auf die Zeichnung im Einzelnen erläutert.

In der Zeichnung zeigt:
Figur 1 bis 3;
   eine schematische Darstellung eines erfindungsgemäßen Sensorgehäusesystems mit einem Adapter mit Außengewinde nach einem ersten Ausführungsbeispiel;
Figur 4 bis 6;
   eine schematische Darstellung eines erfindungsgemäßen Sensorgehäusesystems mit einem Adapter mit kugelförmigem Abschnitt nach einem zweiten Ausführungsbeispiel;
Figur 7 bis 9;
   eine schematische Darstellung eines erfindungsgemäßen Sensorgehäusesystems mit einem Adapter mit einem zylindrischen Abschnitt nach einem dritten Ausführungsbeispiel;
Figur 10 bis 12;
   eine schematische Darstellung eines erfindungsgemäßen Sensorgehäusesystems mit einem Adapter mit einem rohrförmigen Abschnitt nach einem vierten Ausführungsbeispiel.

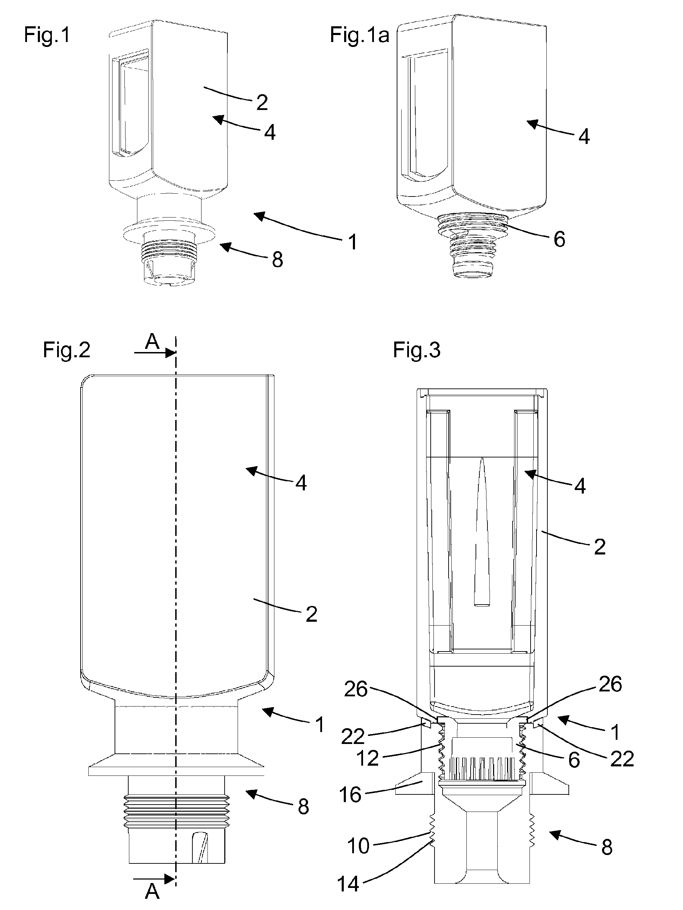

Die Figuren 1 bis 3 zeigen ein erstes Ausführungsbeispiel eines erfindungsgemäßen Sensorgehäusesystems 1. In Figur 1 ist dabei ein optoelektronischer Sensor 2 und ein mit einem Sensorgehäuse 4 verschraubter Adapter 8 in einer perspektivischen Ansicht gezeigt. Das Sensorgehäuse 4 weist gerundete Kanten auf zur Vermeidung von Rückständen an der Sensorgehäuseoberfläche.

Bei dem optoelektronischen Sensor 2 kann es sich um eine Lichtschranke, ein Lichtgitter, ein Reflextaster oder einen Lichttaster zur Entfernungsmessung, Kamerasensoren, Scanner, Farbsensor, Lumineszenzreflextaster, Druckmarkenleser oder dergleichen Sensor handeln.

In den nachfolgenden Figuren sind gleiche Teile mit gleichen Bezugszeichen versehen. Die Ausführungsbeispiele sind kombinierbar.

Für den Lichtein- und/oder Lichtaustritt ist in dem optoelektronischen Sensor 2 eine Frontscheibe vorgesehen. Die Frontscheibe ist vorzugsweise aus Kunststoff gebildet und mit dem Edelstahlgehäuse fest verbunden, beispielsweise eingeklebt. Durch die feste Verbindung der Frontscheibe mit dem Edelstahlgehäuse ist die Verbindung dicht ausgeführt. Eine Frontscheibe aus Kunststoff hat gegenüber einer Glasscheibe den Vorteil, dass diese weniger zur Splitterbildung neigt bei einer Beschädigung als eine Glasscheibe. Für den Einsatz in der Lebensmittelindustrie ist Glas unbedingt zu vermeiden.

Figur 1a zeigt das Sensorgehäuse 4 mit dem Gewindeflansch 6 ohne den Adapter 8 aus Figur 1. Der Gewindeflansch 6 ist dabei an dem Sensorgehäuse 4 beispielsweise angeschweißt, angeklebt, angelötet, direkt einstückig mit dem Sensorgehäuse 4 oder vergleichbar angebracht. Dabei können unterschiedlich ausgebildete Gewindeflansche 6, beispielsweise mit unterschiedlichen Gewinden vorgesehen sein. Der Gewindeflansch 6 kann auch gleichzeitig zwei unterschiedliche Gewinde hintereinander aufweisen. Ein Gewinde, beispielsweise mit einem größeren Durchmesser, ist dabei direkt an dem Sensorgehäuse 4 angeordnet und ein weiteres Gewinde mit einem kleineren Durchmesser schließt den Gewindeflansch 6 zum offenen Ende hin ab. Das größere Gewinde ist dann für den Adapter vorgesehen und das kleinere Gewinde für einen Steckeranschluss oder eine Überwurfmutter für einen Leitungsanschluss.

Figur 2 zeigt das Sensorgehäusesystem 1 aus Figur 1 in einer Seitenansicht. Die Verbindungsstelle zwischen Adapter 8 und Sensorgehäuse 4 ist fugenfrei ausgebildet. In Figur 2 ist ein Schnitt entlang einer Linie A-A eingezeichnet.

Eine entsprechende Schnittdarstellung ist gemäß Figur 2 in Figur 3 dargestellt. Im oberen Teil der Figur 3 ist das Sensorgehäuse 4 des optoelektronischen Sensors 2 dargestellt. Am unteren Abschnitt des Sensorgehäuses 4 ist ein Gewindeflansch 6 mit einem Außengewinde angeordnet. Der Gewindeflansch ist an der Verbindungsstelle 26 mit dem Sensorgehäuse wie bereits in Figur 1a beschrieben, verbunden. Auf den Gewindeflansch 6 ist der Adapter 8 mit einem entsprechenden ersten Gewinde 12, hier einem Innengewinde aufgeschraubt. Der Adapter 8 ist in der endmontierten Position dargestellt. Zwischen dem Adapter 8 und dem Sensorgehäuse 4 ist ein Dichtungsring 22 angeordnet, um die Verbindungsstelle zwischen Sensorgehäuse 4 und Adapter 8 optimal abzudichten. Der Adapter 8 weist weiter als Befestigungsmittel 10 ein zweites Gewinde 14 als Außengewinde auf. Mit Hilfe dieses zweiten Gewindes 14 kann der Adapter 8 beispielsweise in einer Bohrung befestigt werden. Der Adapter 8 wird hierzu in der Bohrung, beispielsweise mit einer Befestigungsmutter verschraubt. Als Begrenzung dient ein Anschlagring 16. Der Anschlagring 16 weist dabei eine Schräge auf, um einen gleichmäßigen Oberflächenübergang zwischen Adapter 8 und einer Befestigungsfläche zu gewährleisten.

Im Innenbereich des Adapters 8 ist weiter eine Bohrung vorgesehen. Diese Bohrung dient der Durchführung eines Verbindungskabels zum optoelektronischen Sensor 2. Das Verbindungskabel sowie die elektronischen und optoelektronischen Komponenten des Sensors 2 sind durch das Sensorgehäusesystem 1, bestehend aus Sensorgehäuse 4 und Adapter 8, gegen äußere Einflüsse wirkungsvoll geschützt.

Dadurch ist das Sensorgehäusesystem 1 zum Einsatz in feuchter Umgebung geeignet ausgebildet. Besonders bevorzugt ist das Sensorgehäusesystem 1 zum Einsatz in der Lebensmittel-, Nahrungsmittel-, Genussmittel und/oder Getränkeindustrie, in der Solarenergieindustrie oder der Pharmaindustrie geeignet ausgebildet und/oder mit Chemikalien, insbesondere aggressiven Chemikalien reinigbar.

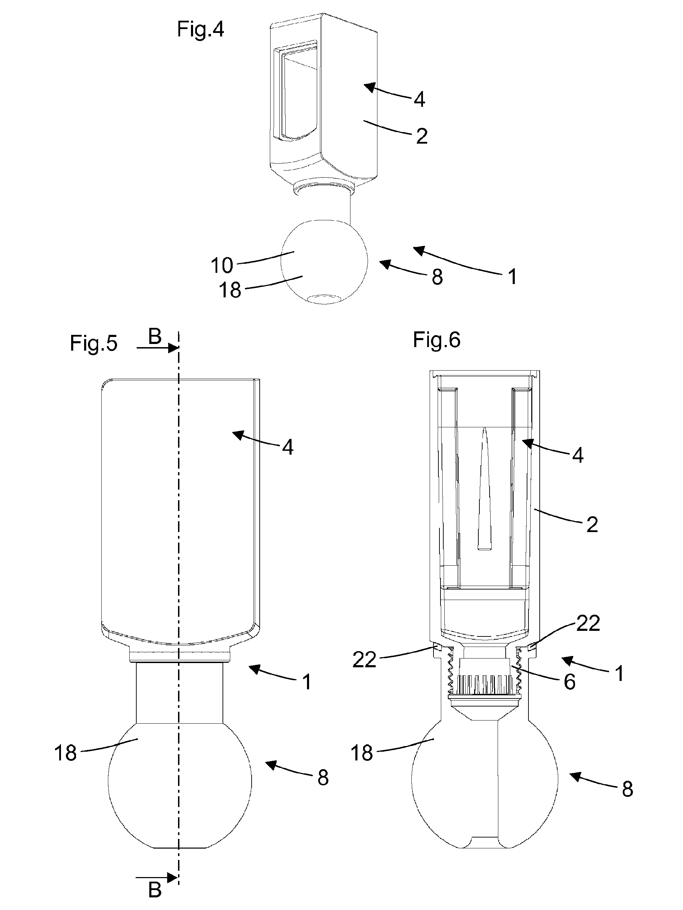

Die Figuren 4 bis 6 zeigen ein weiteres Ausführungsbeispiel. Figur 4 zeigt eine perspektivische Ansicht eines Sensorgehäusesystems 1 mit einem Sensorgehäuse 4 und einem Adapter 8. Im Unterschied zu den Figuren 1 bis 3 ist das Befestigungsmittel 10 des Adapters 8 kugelförmig ausgebildet. Der sphärische oder kugelförmige Abschnitt 18 wird in einer nicht dargestellten Kugelgelenkhalterung gehalten. Durch den kugelförmigen Abschnitt 18 kann der Sensor 2 beliebig gedreht werden und/oder in verschiedene Richtungen geneigt werden. Dadurch lässt sich der Sensor 2 sehr einfach justieren.

Figur 5 zeigt eine Seitenansicht des Sensorgehäusesystems 1 aus Figur 4 mit einem eingezeichneten Schnitt entlang der Linie B-B. In Figur 6 ist eine Darstellung entlang des Schnittes B-B aus Figur 5 gezeigt. Der Adapter 8 mit dem kugelförmigen Abschnitt 18 ist dabei in endmontiertem Zustand dargestellt. Wie bereits zu Figur 3 beschrieben ist der Adapter 8 an dem Gewindeflansch 6 des Sensorgehäuses 4 befestigt. Zwischen Sensorgehäuse 4 und Adapter 8 ist zur optimalen Abdichtung ein Dichtungsring 22 angeordnet. In der Mitte des Adapters 8 ist weiter eine Bohrung angebracht zur Durchführung der Verbindungsleitung des Sensors 2 mit entsprechenden Signal- und Versorgungsleitungen.

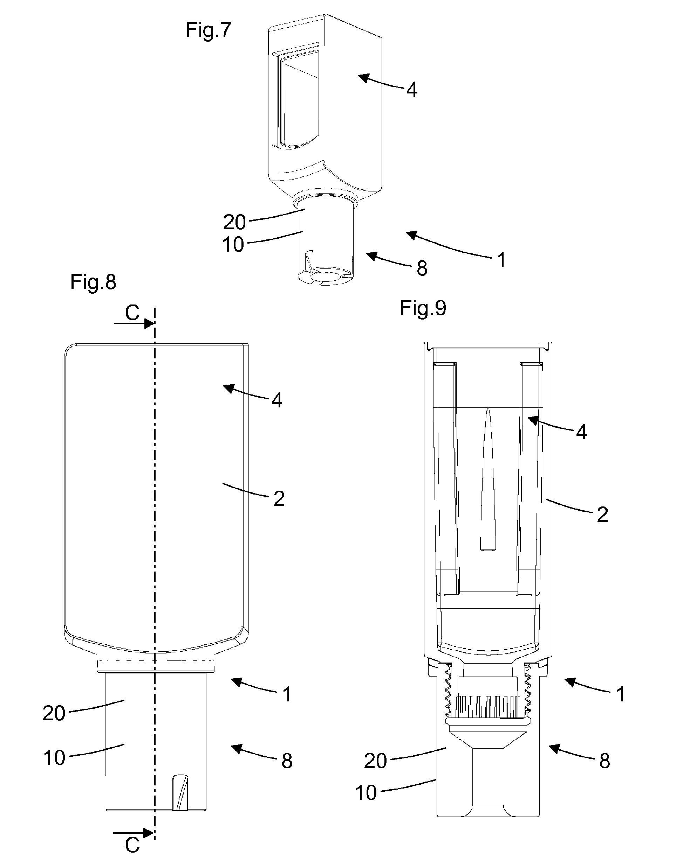

Die Figuren 7 bis 9 zeigen ein weiteres Ausführungsbeispiel der Erfindung. Figur 7 zeigt eine perspektivische Ansicht des Sensorgehäusesystems 1 mit dem Sensorgehäuse 4 und einen Adapter 8 mit einem zylindrischen Abschnitt 20 als Befestigungsmittel 10. In Figur 9 ist eine Schnittdarstellung gezeigt entlang der Linie C-C aus der Seitenansicht gemäß Figur 8. Durch den zylindrischen Abschnitt 20 des Adapters 8 kann der Adapter 8 mit dem Sensorgehäuse 4 sehr einfach an einer nicht dargestellten Befestigungsschelle montiert werden. Durch die zylindrische Form des Adapters 8 kann der Sensor 2 sehr einfach zur Justage um eine Längsachse gedreht werden und entlang der Längsachse auch verschoben werden. Zur Durchführung eines elektrischen Anschlusses ist wie bereits beschrieben eine mittige Bohrung vorgesehen.

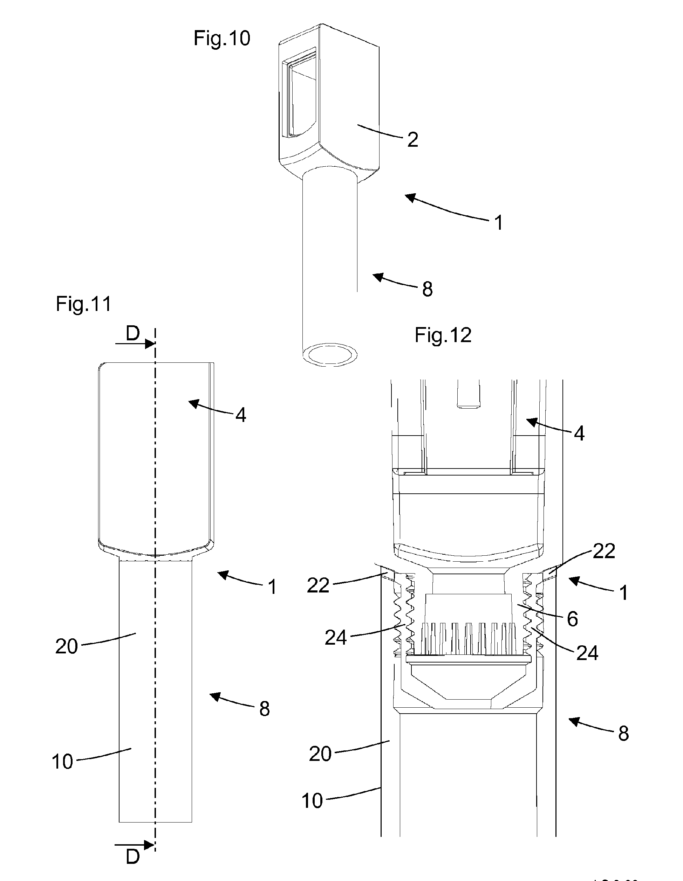

In den Figuren 10 bis 12 ist ein weiteres Ausführungsbeispiel gezeigt. Figur 10 zeigt eine perspektivische Darstellung eines optoelektronischen Sensors 2 mit einem rohrförmig ausgebildeten Adapter 8. In Figur 11 ist eine Seitenansicht des Sensorgehäusesystems 1 aus Figur 10 dargestellt mit einer Schnittlinie entlang D-D. Figur 12 zeigt die entsprechende Schnittdarstellung gemäß Figur 11. In Figur 12 ist neben dem Sensorgehäuse 4 und dem Adapter 8 noch ein Zwischenadapter 24 dargestellt. Der Zwischenadapter 24 weist ein Innengewinde und ein Außengewinde auf. Der Zwischenadapter 24 ist mit dem Innengewinde mit dem Gewindeflansch 6 des Sensorgehäuses 1 verschraubt. Auf das Außengewinde des Zwischenadapters 24 wird dann der rohrförmig ausgebildete Adapter 8 aufgeschraubt. Zwischen dem Adapter 8 und dem Sensorgehäuse 4 ist ein Dichtungsring 22 angeordnet, um eine optimale Dichtigkeit zwischen Sensorgehäuse 4 und Adapter 8 zu gewährleisten. Der Zwischenadapter 24 dient zur Anpassung der Gewinde zwischen Gewindeflansch 6 des Sensorgehäuses 4 und dem Gewinde des Adapters 8. Dadurch ist es möglich, zusätzliche Adapter 8 mit dem Sensorgehäuse 4 zu verbinden, um ein Sensorgehäusesystem 1 zu erhalten, bestehend aus Sensorgehäuse 4, Adapter 8 und Zwischenadapter 24. Mit Hilfe des rohrförmigen Adapters 8 kann das Sensorgehäuse 4 weiter beabstandet von einer Montagefläche montiert werden. Der rohrförmige Adapter kann dabei auf unterschiedlichste Weise, je nach Einbausituation geformt und befestigt werden. Beispielsweise kann das Ende des rohrförmigen Abschnitts angeschweißt und/oder das Rohrstück entsprechend gebogen werden.

### Bezugszeichen:

- 1: Sensorgehäusesystem
- 2: optoelektronischer Sensor
- 4: Sensorgehäuse
- 6: Gewindeflansch
- 8: Adapter
- 10: Befestigungsmittel
- 12: erstes Gewinde
- 14: zweites Gewinde
- 16: Anschlagring
- 18: sphärischer oder kugelförmiger Abschnitt
- 20: zylindrischer Abschnitt
- 22: Dichtungsring
- 24: Zwischenadapter
- 26: Verbindungsstelle

## Patentansprüche

1. Sensorgehäusesystem für optoelektronische Sensoren (2),
bestehend aus wenigstens einem flüssigkeitsdichten Sensorgehäuse (4) aus korrosionsfreiem Stahl mit einer Frontscheibe aus Kunststoff, die mit dem Edelstahlgehäuse fest verbunden ist, mit einem Gewindeflansch (6) für einen elektrischen Anschluss
und einem Adapter (8) mit einem ersten Gewinde (12) für den Gewindeflansch (6), wobei
der Adapter (8) Befestigungsmittel (10) für das Sensorgehäusesystem (1) aufweist und der Adapter fugenlos an das Sensorgehäuse anbringbar ist.

2. Sensorgehäusesystem nach Anspruch 1, **dadurch gekennzeichnet, dass** das Befestigungsmittel (10) durch ein zweites Gewinde (14) gebildet ist.

3. Sensorgehäusesystem nach Anspruch 1 oder 2, **dadurch gekennzeichnet, dass** der Adapter (8) einen Anschlagring (16) zur Montage aufweist.

4. Sensorgehäusesystem nach Anspruch 1, **dadurch gekennzeichnet, dass** das Befestigungsmittel (10) eine Außenkontur aufweist, die zumindest in einem Abschnitt sphärisch ausgebildet ist und/oder einen kugelförmigen Abschnitt (18) aufweist.

5. Sensorgehäusesystem nach einem der vorhergehenden Ansprüche, **dadurch gekennzeichnet, dass** das Befestigungsmittel (10) einen zylindrischen Abschnitt (20 aufweist.

6. Sensorgehäusesystem nach einem der vorhergehenden Ansprüche, **dadurch gekennzeichnet, dass** zwischen dem Sensorgehäuse (4) und dem Adapter (8) ein Dichtungsring (22) vorgesehen ist.
